# EUROPEAN PATENT SPECIFICATION

(11) **EP 1 549 113 B1**
(45) Date of publication and mention of the grant of the patent: **15.09.2010**
(21) Application number: 02782664.3
(22) Date of filing: 13.12.2002
(51) Int. Cl.: H05B 41/08, F21S 2/00

(54) **A STARTER FOR FLUORESCENT LAMP AND A FLUORESCENT LAMP USING THE STARTER**
STARTER FÜR EINE FLUORESZENZLAMPE UND FLUORESZENZLAMPE MIT DEM STARTER
DEMARREUR POUR LAMPE FLUORESCENTE ET LAMPE FLUORESCENTE UTILISANT CE DEMARREUR

(30) Priority: 30.09.2002 CN 02255055
(43) Date of publication of application: 29.06.2005
(73) Proprietor: Huo Nang Development Co. Ltd., Hsinchu, Taiwan (TW)
(72) Inventor: LI, Zhenxiang, Hebei District, Tianjin 300150 (CN)
(74) Representative: Müller - Hoffmann & Partner
(86) International application number: PCT/CN2002/000890
(87) International publication number: WO 2004/030419

(56) References cited:
- EP-A1- 0 392 060
- WO-A-00/15011
- CN-U- 2 079 845
- CN-U- 2 084 704
- CN-U- 87 201 711
- CN-Y- 2 346 137
- JP-A- 58 085 266
- JP-A- 60 170 151
- JP-A- 2002 216 703
- US-A- 4 381 476

## Description

### Technical Field

The present invention relates to a glow starter for fluorescent lamp and compact fluorescent lamp and a corresponding fluorescent lamp fixture, in particular to a glow starter of environment-protection type without radioactive isotope and capable of meeting starting performance requirements after being stored in a completely dark condition for over 15 hours and a corresponding fluorescent lamp fixture.

### Background Art

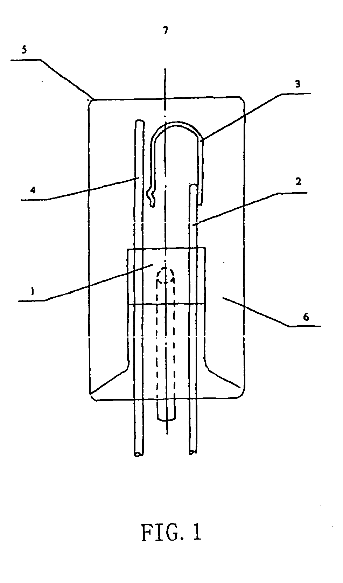

The conventional fluorescent lamps or compact fluorescent lamps use a glow bottle as shown in Fig. 1, the structure of which comprises a stem assembly (1) which has a short lead wire or electrode (2), a bimetal sheet (3) spot-welded on the short lead wire, and a long lead wire or electrode (4); an envelope (5) in which the stem assembly (1) is sealed and disposed; and discharge gas (6) filled in the envelope (5).

When an operation voltage is applied between the short lead wire (2) and the long lead wire (4), glow discharge is generated between the long lead wire (4) and the bimetal sheet (3). The long lead wire (4) and the bimetal sheet (3), which is formed by pressure-melting together two metal sheets of different expansion coefficients, act as discharge electrodes. The heat generated from the glow discharge causes the bimetal sheet (3) to deform to approach the long lead wire (4) until contacting with each other, therefore the starting requirement of the fluorescent lamp is fulfilled.

It is needed for the gas discharge that there must be presence of a few spatial free electrons at the beginning of applying the voltage. These free electrons, under the acceleration of the electric field, collide with the discharge gas to ionize the discharge gas into ions and electrons, and form "avalanche" discharge. Because in the daytime there are cosmic rays from the sun which can ionize a few spatial free electrons in the envelope (5), it is very easy to form "avalanche" discharge in the daytime, and the performance indexes of the starter can meet the requirements easily.

However, a fluorescent lamp is a lighting electric appliance and its starting condition must be at the night, so the national standard QB2276 - 96 and the international standard IEC155: 1993 specify that the performance test condition of the starter for fluorescent lamp must be in a completely dark condition, and the testing samples should be placed in the completely dark condition for over 15 hours before the tests.

In the completely dark condition, since cosmic rays are largely weakened and the number of spatial free electrons is largely reduced, the starting performance of the starter for fluorescent lamp usually can not meet the requirements.

In order to solve the above problems, conventional glow starters adopt the following three methods:
1. adding material containing radioactive isotope Pm-147 in the surface of the short lead wire;
2. coating noctilucent powders containing Pm-147 at a certain location in the envelope (usually on the stem);
3. filling discharge gas containing tritium or krypton 85 or coating material containing tritium in the envelope.
All the three methods utilize the characteristics that radioactive isotope can generate spatial free electrons in a completely dark condition, which meets the starting requirements in a completely dark condition. The defect of them is involving radioactive isotope, which does not comply with the more and more strict requirements for environment protection.

From JP 2002 216703 A a glow lamp is known which is capable of restricting a dark discharge start delay to a degree nearly equal to a conventional glow lamp. Therefore, the years of radio active material is avoided. A rare gas is sealed in a container and a glow switch element provided with two lead wires and a by bimetal electrode at an end of a lead wire is provided inside the container. An oxide object including an alcali oxide metal and alkali oxide earth group metal is sealed in the container and the oxide object is fixed to a member with the same electrical potential as the lead wire.

From WO 00/15011 a starter for a fluorescent lamp is known, a starter of which forms a part of a collective circuit with the fluorescent lamp. The starter comprises a capacitor with a relatively high value, starting from 5 nF, which shall result in lengthened life spend and more stable starting of a lamp.

JP 60 170151 A discloses a glow starter comprising electrodes coated with an electron emission substance containing zirconium and cesium.

### Summary of the Invention

In order to overcome the above existing defects in the prior art, an object of the present invention is to provide a non-radioactive and environment protecting glow bottle or glow starter for fluorescent lamp, which utilizes cesium-based compound and has a structure of disposing a lantern ring around the discharge electrode.

Another object of the present invention is to provide a fluorescent lamp fixture of a single-tube or dual-tube-in-series fluorescent lamp with the unique glow starter or glow bottle according to the present invention.

The structure of the glow bottle for fluorescent lamp of the present invention comprises a stem assembly which has a short lead wire, bimetal sheet spot-welded on the short lead wire and a long lead wire; an envelope in which the stem assembly is sealed; and discharge gas filled in the vacuumized envelope, wherein cesium-based compound is coated on the short lead wire.

The glow starter for fluorescent lamp of the present invention can also have a glass, ceramics or metal lantern ring installed around the short lead wire.

The fluorescent lamp fixture of the present invention comprises: a ballast; one or two parallel branches in series each including a fluorescent lamp, a glow bottle and a capacitor; and said one or two parallel branches in series being in series connected with said ballast; said glow bottle comprising a stem assembly which has a short lead wire, bimetal sheet spot-welded on the short lead wire, and a long lead wire; an envelope in which the stem assembly is sealed; and discharge gas filled in the vacuumized envelope, characterized in that the glow starter or glow bottle of the present invention is used.

By means of using cesium-based compound, the glow starter for fluorescent lamp and the corresponding fluorescent lamp fixture according to the present invention can generate desired number of spatial free electrons by field emission, so that the problem of starting in a completely dark condition is solved. In the meantime, not using the conventional technique that adopts radioactive material as the material for generating spatial free electrons, so the present invention well meets and satisfies the environment protection requirements.

### Brief description of the Drawings

Hereinafter the embodiments of the glow starter for a fluorescent lamp will be described with reference to the accompanying drawings.
Fig.1 is a schematic structural diagram of the conventionnal glow bottle for fluorescent lamp.
Fig. 2 is a schematic structural diagram of the glow bottle for fluorescent lamp adopting cesium-based compound according to the present invention.
Fig. 3 is a schematic structural diagram of the glow bottle for fluorescent lamp adopting the discharge electrode of a lantern-ring structure according to the present invention.
Fig. 4 is a schematic structural diagram of the glow starter in which installed a glow bottle for fluorescent lamp according to the present invention.
Fig. 5 is a schematic structural diagram of a single-tube light fixture adopting the glow starter or glow bottle for fluorescent lamp according to the present invention.
Fig. 6 is a schematic structural diagram of a dual-tube light fixture adopting the glow starter or glow bottle for fluorescent lamp according to the present invention.

### Detailed Description of the Embodiments

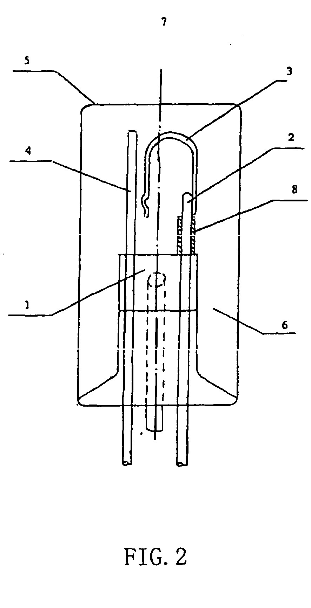

Fig. 2 shows a structure of the glow bottle for a fluorescent lamp according to the present invention. Its basic components are the same as those of conventional glow bottles for fluorescent lamps, i.e. comprising a stem assembly (1) with a short lead wire (2), bimetal sheet (3) spot-welded on the short lead wire, and a long lead wire (4); an envelope (5) in which the stem assembly (1) is sealed and disposed; and discharge gas (6) filled in the envelope (5).

The difference of the invention from the conventional structure lies in that cesium-based compound (8), such as cesium chromate, is coated on the short lead wire (2). The operational principle and process of the glow bottle according to the invention is as follows: the glow starter envelope (5), after exhausting the air and filling of discharge gas, is applied with a voltage so that electric discharge occurs between the discharge electrodes (3) and (4), during which a few electrons bombard on the short lead wire (2), causing the cesium-based compound (8) coated thereon to decompose pure metal cesium. Since the work function of cesium is very low, the presence of cesium on the discharge electrodes (3) and (4) would generate field emission to emit electrons spatially under the current starter operational voltage. Therefore, according to the invention, the starting under a completely dark condition is realized by provisioning of electrons field-emitted from cesium which is a low work function material as initial electrons indispensable for the "avalanche" discharge. In this case, cesium is introduced to replace radioactive material, so as to greatly benefit environment protection. The requirements of QB2276 - 96 and IEC155: 1993 concerning the test in a completely dark condition can be met by controlling well the coating amount of the cesium-based compound and the releasing amount of cesium.

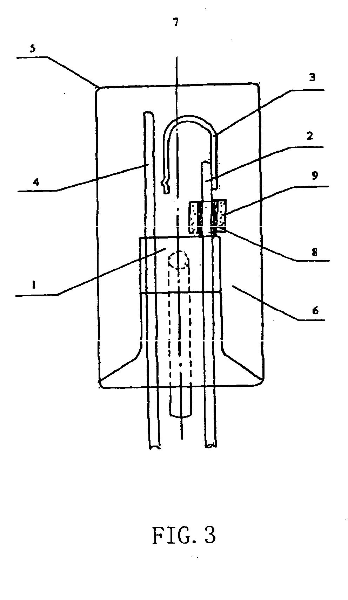

But for certain types of glow starters, because it is not easy to control the releasing amount of cesium and the storage amount of the cesium-based compound, in order to improve the yield, a structure of disposing a lantern ring (9) around the coated material is also used as shown in Fig. 3. The structure may be implemented in two embodiments as:
1. Disposing around the coated material a glass ring or ceramics ring, being an insulator which can not shield the electric field but block electrons from passing-through, so that the electrons must bypass, thereby reducing the bombarding energy of the electrons on the cesium-based compound. In this way, the decomposition rate of the cesium-based compound is reduced, the decomposed cesium adheres to the inner side of the lantern ring, and the moving speed of the decomposed cesium toward the discharge electrode becomes lower, which benefits prolonging working life of the starter.
2. Disposing around the coated material a metal ring, which is conductive and can shield the electric field, thus being more beneficial for reducing the cesium decomposition rate and lowering the moving speed of the cesium, especially for a large power starter.

The lantern-ring structure according to the invention further improves the production yield and performance stability after introducing the cesium-based compound.

The characteristics of the embodiments are as follows:
Cesium-based compound is coated on the short lead wire (2). The electric field strength at the short lead wire (2) becomes weaker due to shielding of the bimetal sheet (3) and the energy of the discharge electrons bombarding thereon becomes lower, thereby the decomposition rate of cesium-based compound can be controlled to generate a small amount of metal cesium. The decomposed cesium adheres to the discharge electrodes (3) and (4) and can produce field-emitted electrons when applying a voltage between the discharge electrodes since cesium has a very low work function. The field-emitted electrons cause "avalanche" discharge after being accelerated by the electric field. In this manner, the present invention could replace the existing manner in the prior art that uses radioactive isotope to generate initial spatial free electrons. In the meantime, field emission depends on the electric field strength and the emitting material only, regardless whether it is dark or not. Therefore, by means of using novel electron emitting material - cesium and utilizing the structure with appropriate electric field strength - metal lantern ring structure, a novel principle and operation mode for generating free electrons through field emission is utilized, thus the objective of starting without radioactivity and under a completely dark condition can be achieved.

Adopting the lantern-ring structure has a further advantage that, cesium is prevented from being produced in a large amount because of the weak electric field strength at the short lead wire (2) so that the problem that excessive cesium may be detrimental to other parameters of the starter is eliminated. Therefore, for a higher wattage starter, the present invention has effect of improving the production yield.

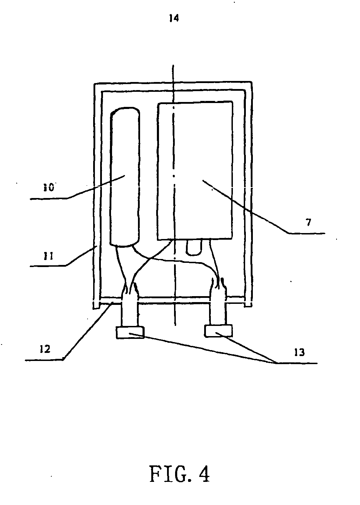

The glow bottle according to the invention can be installed in an existing starter cap to form glow starter of a conventional fluorescent lamp or a compact fluorescent lamp, the structure of which is shown in Fig. 4. The glow bottle (7) together with a capacitor (10) is installed within a cap (11) and a pin base (12), on which there are disposed conductive metal pins (13), such as copper tacks, for electric connection. All of the above components form a glow starter for a fluorescent lamp (14), which is applicable to light fixture using fluorescent lamp. Another embodiment of the present invention is to use said unique glow starter (14) or glow bottle (7) to compose lighting fixture of fluorescent lamp or compact fluorescent lamp, the structure of which is the same as that of the conventional light fixture except replacing the conventional glow bottle or starter and to use the glow bottle (7) or glow starter (14) according to the present invention. Its circuit structure is described as below in which the description of the same parts as that of the prior art is omitted:

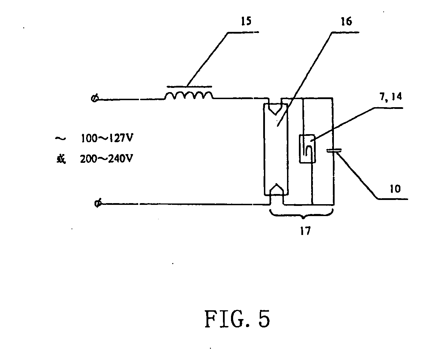

Fig. 5 is a schematic structural diagram of the single-tube fluorescent lamp or compact fluorescent lamp fixture adopting the glow starter or glow bottle according to the invention. The light fixture comprises a ballast (15), a fluorescent tube (16), a glow bottle (7) or glow starter (14), and a capacitor (10). The light fixture is operable at the voltage of 110V - 130V or 200V - 240V.

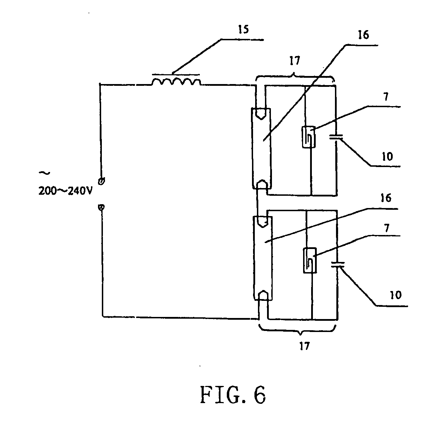

Fig. 6 is a schematic structural diagram of light fixture of the dual-tube fluorescent lamps or compact fluorescent lamps adopting the glow starters or glow bottles according to the invention. The light fixture comprises a ballast (15), two fluorescent tubes (16) in series connected with the ballast; and glow bottles (7) or glow starters (14) and capacitors (10), which are connected to the two fluorescent tubes (16) in parallel respectively. The light fixture is operable at the voltage of 200V - 240V.

Compared with the prior art, the above-mentioned technical solutions according to the present invention eliminates the long existing problem in the art that desired free electrons must be generated by using radioactive materials which fails to meet environment protection requirements. The present invention uses non-radioactive material - metal cesium with a low work function, and makes the operation of the glow starter is based on a new principle, i.e. utilizing field emission to generate spatial free electrons. In addition, the unique lantern-ring structure is adopted to form a rational and effective electric field distribution, so that it is ensured that the starting performance can meet the requirements of the national standard and the international standard in a completely dark condition.

## Claims

1. A glow bottle for fluorescent lamp comprising:
- a stem assembly (1) having a short lead wire (2), a bimetal sheet (3) spot-welded on the short lead wire, and a long lead wire (4);
- an envelope (5), said stem assembly (1) being sealed within said envelope; and
- discharge gas (6) filled in the envelope (5) after vacuumization,
- all the components forming said glow bottle (7) for fluorescent lamp, wherein a cesium-based compound coating (8) is coated on the short lead wire (2), **characterized in that**
said cesium-based compound (8) being a cesium chromate coating.

2. The glow bottle for fluorescent lamp according to claim 1, **characterized in that** a lantern ring (9) of insulating material of glass or ceramics is disposed around the short lead wire (2).

3. The glow bottle for fluorescent lamp according to claim 1, **characterized in that** a lantern ring (9) of conductive material of metal is disposed around the short lead wire (2).

4. The glow bottle for fluorescent lamp according to claim 1, **characterized in that** the glow bottle (7) and a capacitor (10) are both disposed within a cap (11) and a pin base (12), conductive metal pins (13) are disposed on said pin base (12) for electrical connection, and all of the above components form a glow starter for fluorescent lamp (14).

5. The glow bottle for fluorescent lamp according to claim 2, **characterized in that** the glow bottle (7) and a capacitor (10) are both disposed within a cap (11) and a pin base (12), conductive metal pins(13) are disposed on said pin base (12) for electric connection, and all of the above components form a glow starter for fluorescent lamp (14).

6. The glow bottle for fluorescent lamp according to claim 3, **characterized in that** the glow bottle (7) and a capacitor (10) are both disposed within a cap (11) and a pin base (12), conductive metal pins (13) are disposed on said pin base (12) for electric connection, and all of the above components form a glow starter for fluorescent lamp (14).

7. A fluorescent lamp fixture, comprising:
a ballast (15);
one or two parallel branches in series (17) each including a fluorescent tube (16), a glow bottle (7) and a capacitor (10); said one or two parallel branches (17) being connected in series to the ballast (15);
said glow bottle (7) comprising:
a stem assembly (1) having a short lead wire (2), a bimetal sheet (3) spot-welded on the short lead wire, and a long lead wire (4);
an envelope (5), said stem assembly (1) being sealed within said envelope(5); and
discharge gas (6) filled in the envelope (5) after vacuumization, wherein a cesium-based compound coating (8) is coated on the short lead wire (2) of said glow bottle (7)
**characterized in that**
said cesium-based compound (8) being a cesium chromate coating.

8. The fluorescent lamp fixture according to claim 7, **characterized in that** a lantern ring (9) of insulating material of glass or ceramics is disposed around the cesium-based compound (8) on the short lead wire (2) of the glow bottle (7).

9. The fluorescent lamp fixture according to claim 7, **characterized in that** a lantern ring (9) of conductive material of metal is disposed around the cesium-based compound (8) on the short lead wire (2) of the glow bottle (7).

10. The lighting fixture according to claim 7, **characterized in that** the glow bottle (7) and a capacitor (10) are both disposed within a cap (11) and a pin base (12), conductive metal pins (13) are disposed on said pin base (12) for electric connection, and all of the above components form a glow starter for fluorescent lamp (14), said glow starter being connected in parallel to the fluorescent tube (16).

11. The fluorescent lamp fixture according to claim 8, **characterized in that** the glow bottle (7) and a capacitor (10) are both disposed within a cap (11) and a pin base (12), conductive metal pins (13) are disposed on said pin base (12) for electric connection, and all of the above components form a glow starter for fluorescent lamp (14), said glow starter being connected in parallel to a fluorescent tube (16).

12. The fluorescent lamp fixture according to claim 9. **characterized in that** the glow bottle (7) and a capacitor (10) are both disposed within a cap (11) and a pin base (12), conductive metal pins (13) are disposed on said pin base (12) for electric connection, and all of the above components form a glow starter for fluorescent lamp (14), said glow starter being connected in parallel to a fluorescent tube (16)

13. A glow starter including the glow bottle according to any one of claims to 6.

## Patentansprüche

1. Glühflasche für eine Fluoreszenzlampe, mit:
einer Stammanordnung (1) mit einer kurzen Zuleitung (2), einer auf die kurze Zuleitung punktaufgeschweißten Bimetallplatte (3) und einer langen Zuleitung (4);
einer Ummantelung (5), wobei die Stammanordnung (1) innerhalb der Ummantelung versiegelt ist; und
einem nach einem Evakuieren in die Ummantelung (5) eingefüllten Entladungsgas (6),
wobei all diese Komponenten die Glühflasche (7) für eine Fluoreszenzlampe bilden, wobei die kurze Zuleitung (2) mit einer Beschichtung aus einer Caesium-basierten Verbindung (8) beschichtet ist,
**dadurch gekennzeichnet, dass**
die Caesium-basierte Verbindung (8) eine Caesium-Chromat-Beschichtung ist.

2. Glühflasche für eine Fluoreszenzlampe nach Anspruch 1, **dadurch gekennzeichnet, dass** ein Laternenring (9) aus einem isolierenden Material aus Glas oder Keramik um die kurze Zuleitung (2) herum angeordnet ist.

3. Glühflasche für eine Fluoreszenzlampe nach Anspruch 1, **dadurch gekennzeichnet, dass** ein Laternenring (9) aus einem leitenden Material aus Metall um die kurze Zuleitung (2) herum angeordnet ist.

4. Glühflasche für eine Fluoreszenzlampe nach Anspruch 1, **dadurch gekennzeichnet, dass** die Glühflasche (7) und ein Kondensator (10) innerhalb einer Kappe (11) und einer Stift-Basis (12) angeordnet sind, leitfähige Metallstifte (13) auf der Stift-Basis (12) für eine elektrische Verbindung angeordnet sind, und alle der obigen Komponenten einen Glühstarter für eine Fluoreszenzlampe (14) bilden.

5. Glühflasche für eine Fluoreszenzlampe nach Anspruch 2, **dadurch gekennzeichnet, dass** die Glühflasche (7) und ein Kondensator (10) innerhalb einer Kappe (11) und einer Stift-Basis (12) angeordnet sind, leitfähige Metallstifte (13) auf der Stift-Basis (12) für eine elektrische Verbindung angeordnet sind, und alle der obigen Komponenten einen Glühstarter für eine Fluoreszenzlampe (14) bilden.

6. Glühflasche für eine Fluoreszenzlampe nach Anspruch 3, **dadurch gekennzeichnet, dass** die Glühflasche (7) und ein Kondensator (10) innerhalb einer Kappe (11) und einer Stift-Basis (12) angeordnet sind, leitfähige Metallstifte (13) auf der Stift-Basis (12) für eine elektrische Verbindung angeordnet sind, und alle der obigen Komponenten einen Glühstarter für eine Fluoreszenzlampe (14) bilden.

7. Haltevorrichtung für eine Fluoreszenzlampe, mit:
einer Last (15);
einem oder zwei parallelen, in Serie geschalteten Zweigstromkreisen (17), die jeweils eine Leuchtstroffröhre (16), eine Glühflasche (7) und einen Kondensator (10) aufweist/ aufweisen; wobei der eine oder die zwei parallelen Zweigstromkreise (17) in Serie zu der Last (15) verschaltet ist/sind;
wobei die Glühflasche (7) folgendes aufweist:
eine Stammanordnung (1) mit einer kurzen Zuleitung (2), eine auf die kurze Zuleitung punktaufgeschweißte Bimetallplatte (3) und eine lange Zuleitung (4);
eine Ummantelung (5), wobei die Stammanordnung (1) innerhalb der Ummantelung (5) versiegelt ist; und
ein nach einem Evakuieren in die Ummantelung (5) eingefülltes Entladungsgas (6), wobei die kurze Zuleitung (2) der Glühflasche (7) mit einer Beschichtung aus einer Caesium-basierten Verbindung (8) beschichtet ist,
**dadurch gekennzeichnet, dass**
die Caesium-basierte Verbindung (8) eine Caesium-Chromat-Beschichtung ist.

8. Haltevorrichtung für eine Fluoreszenzlampe nach Anspruch 7, **dadurch gekennzeichnet, dass** ein Laternenring (9) aus einem isolierenden Material aus Glas oder Keramik um die auf der kurzen Zuleitung (2) der Glühflasche vorgesehenen Caesium-basierten Verbindung herum angeordnet ist.

9. Haltevorrichtung für eine Fluoreszenzlampe nach Anspruch 7, **dadurch gekennzeichnet, dass** ein Laternenring (9) aus einem leitenden Material aus Metall um die auf der kurzen Zuleitung (2) der Glühflasche vorgesehenen Caesium-basierten Verbindung herum angeordnet ist.

10. Haltevorrichtung für eine Fluoreszenzlampe nach Anspruch 7, **dadurch gekennzeichnet, dass** die Glühflasche (7) und ein Kondensator (10) innerhalb einer Kappe (11) und einer Stift-Basis (12) angeordnet sind, leitfähige Metallstifte (13) auf der Stift-Basis (12) für eine elektrische Verbindung angeordnet sind, und alle der obigen Komponenten einen Glühstarter für eine Fluoreszenzlampe (14) bilden, wobei der Glühstarter parallel zur Leuchtstoffröhre geschaltet ist.

11. Haltevorrichtung für eine Fluoreszenzlampe nach Anspruch 8, **dadurch gekennzeichnet, dass** die Glühflasche (7) und ein Kondensator (10) innerhalb einer Kappe (11) und einer Stift-Basis (12) angeordnet sind, leitfähige Metallstifte (13) auf der Stift-Basis (12) für eine elektrische Verbindung angeordnet sind, und alle der obigen Komponenten einen Glühstarter für eine Fluoreszenzlampe (14) bilden, wobei der Glühstarter parallel zur Leuchtstoffröhre geschaltet ist.

12. Haltevorrichtung für eine Fluoreszenzlampe nach Anspruch 9, **dadurch gekennzeichnet, dass** die Glühflasche (7) und ein Kondensator (10) innerhalb einer Kappe (11) und einer Stift-Basis (12) angeordnet sind, leitfähige Metallstifte (13) auf der Stift-Basis (12) für eine elektrische Verbindung angeordnet sind, und alle der obigen Komponenten einen Glühstarter für eine Fluoreszenzlampe (14) bilden, wobei der Glühstarter parallel zur Leuchtstoffröhre geschaltet ist.

13. Glühstarter mit einer Glühflasche nach einem der Ansprüche 1 bis 6.

## Revendications

1. Tube à lueur pour lampe fluorescente comprenant :
- un ensemble formant tige (1) ayant un fil de sortie court (2), un bilame métallique (3) soudé par points sur le fil de sortie court et un fil de sortie long (4) ;
- une enveloppe (5), ledit ensemble formant tige (1) étant scellé dans ladite enveloppe ; et
- un gaz de décharge (5) rempli dans l'enveloppe (5) après mise sous vide,
- tous les composants formant ledit tube à lueur (7) pour lampe fluorescente, dans lequel un revêtement de composé à base de césium (8) est revêtu sur le fil de sortie court (2),
**caractérisé en ce que**
ledit composé à base de césium (8) est un revêtement de chromate de césium.

2. Tube à lueur pour lampe fluorescente selon la revendication 1, **caractérisé en ce qu'**une bague-lanterne (9) en matière isolante de verre ou de céramique est disposée autour du fil de sortie court (2).

3. Tube à lueur pour lampe fluorescente selon la revendication 1, **caractérisé en ce qu'**une bague-lanterne (9) en matière conductrice métallique est disposée autour du fil de sortie court (2).

4. Tube à lueur pour lampe fluorescente selon la revendication 1, **caractérisé en ce que** le tube à lueur (7) et un condensateur (10) sont tous les deux disposés à l'intérieur d'un capuchon (11) et d'une base pour broches (12), des broches conductrices métalliques (13) sont disposées sur ladite base pour broches (12) pour connexion électrique, et tous les composants précédents forment un starter à lueur pour lampe fluorescente (14).

5. Tube à lueur pour lampe fluorescente selon la revendication 2, **caractérisé en ce que** le tube à lueur (7) et un condensateur (10) sont tous les deux disposés à l'intérieur d'un capuchon (11) et d'une base pour broches (12), des broches conductrices métalliques (13) sont disposées sur ladite base pour broches (12) pour connexion électrique, et tous les composants précédents forment un starter à lueur pour lampe fluorescente (14).

6. Tube à lueur pour lampe fluorescente selon la revendication 3, **caractérisé en ce que** le tube à lueur (7) et un condensateur (10) sont tous les deux disposés à l'intérieur d'un capuchon (11) et d'une base pour broches (12), des broches conductrices métalliques (13) sont disposées sur ladite base pour broches (12) pour connexion électrique, et tous les composants précédents forment un starter à lueur pour lampe fluorescente (14).

7. Appareil à lampe fluorescente, comprenant :
un ballast (15) ;
une ou deux branches parallèles en série (17) chacune incluant un tube fluorescent (16), un tube à lueur (7) et un condensateur (10) ; ladite une ou lesdites deux branches parallèles (17) étant reliées en série au ballast (15) ;
ledit tube à lueur (7) comprenant :
un ensemble formant tige (1) ayant un fil de sortie court (21), un bilame métallique (3) soudé par points sur le fil de sortie court, et un fil de sortie long (4) ;
une enveloppe (5), ledit ensemble formant tige (1) étant scellé dans ladite enveloppe (5) ; et
un gaz de décharge (6) rempli dans l'enveloppe (5) après mise sous vide, dans lequel un revêtement composé à base de césium (8) est revêtu sur le fil de sortie court (2) dudit tube à lueur (7)
**caractérisé en ce que**
ledit composé à base de césium (8) est un revêtement de chromate de césium.

8. Appareil à lampe fluorescente selon la revendication 7, **caractérisé en ce qu'**une bague-lanterne (9) en matière isolante de verre ou de céramique est disposée autour du composé à base de césium (8) sur le fil de sortie court (2) du tube à lueur (7).

9. Appareil à lampe fluorescente selon la revendication 7, **caractérisé en ce qu'**une bague-lanterne (9) en matière conductrice métallique est disposée autour du composé à base de césium (8) sur le fil de sortie court (2) du tube à lueur (7).

10. Appareil d'éclairage selon la revendication 7, **caractérisé en ce que** le tube à lueur (7) et un condensateur (10) sont tous les deux disposés à l'intérieur d'un capuchon (11) et d'une base pour broches (12), des broches conductrices métalliques (13) sont disposées sur ladite base pour broches (12) pour connexion électrique, et tous les composants précédents forment un starter à lueur pour lampe fluorescente (14), ledit starter à lueur étant relié en parallèle à un tube fluorescent (16).

11. Appareil à lampe fluorescente selon la revendication 8, **caractérisé en ce que** le tube à lueur (7) et un condensateur (10) sont tous les deux disposés à l'intérieur d'un capuchon (11) et d'une base pour broches (12), des broches conductrices métalliques (13) sont disposées sur ladite base pour broches (12) pour connexion électrique, et tous les composants précédents forment un starter à lueur pour lampe fluorescente (14), ledit starter à lueur étant relié en parallèle à un tube fluorescent (16).

12. Appareil à lampe fluorescente selon la revendication 9, **caractérisé en ce que** le tube à lueur (7) et un condensateur (10) sont tous les deux disposés à l'intérieur d'un capuchon (11) et d'une base pour broches (12), des broches conductrices métalliques (13) sont disposées sur ladite base pour broches (12) pour connexion électrique, et tous les composants précédents forment un starter à lueur pour lampe fluorescente (14), ledit starter à lueur étant relié en parallèle à un tube fluorescent (16).

13. Starter à lueur incluant le tube à lueur selon l'une quelconque des revendications 1 à 6.
